# EUROPEAN PATENT APPLICATION

(11) **EP 2 161 948 A1**
(43) Date of publication of application: **10.03.2010**
(21) Application number: 08425589.2
(22) Date of filing: 04.09.2008
(51) Int. Cl.: H04R 5/02, H04R 19/02, H04R 3/12, B60R 11/02

(54) **Electrostatic loudspeaker systems for application in the cabin of an industrial or commercial vehicle**

(71) Applicant: Iveco S.p.A., 10156 Torino (IT)
(72) Inventor: Martini, Massimo, 10088 Volpiano (IT)
(74) Representative: Borsano, Corrado

(57) **Abstract**

The present invention relates to an electrostatic loudspeaker system for application in the cabin of an industrial or commercial vehicle, said electrostatic loudspeakers being inserted in panels and positioned inside the cabin so that there are at least: two electrostatic loudspeakers in lateral position over the doors, and two electrostatic loudspeakers in front position over the windscreen, on the front roof panel, or on the sun visors. The positions and inclinations of the electrostatic loudspeakers are such that the sound can be directed toward the people in the cabin, in particular toward the driver.

## Description

The present invention relates to the field of sound amplification in vehicle cabins, and in particular to an electrostatic loudspeaker system for application in the cabin of an industrial or commercial vehicle.

As it is known, the electrostatic loudspeaker is made by a panel about 4 mm thick, which has a flat internal diaphragm which vibrates like a capacitor, and two external covering perforated plates, at the two sides of the diaphragm. The sound produced by the diaphragm, when it is appropriately electrically excited by the amplification system to which it is connected, can come out through these plates.

The electrostatic loudspeaker is very light and thin. The emitted sound is very directional and the emitted sound level does not decay much as a function of the distance, because the electrostatic loudspeaker emits plane waves while the traditional cone electromagnetic loudspeaker emits semispherical wave.

The latter, being a punctiform source, emits a sound level that decays of -6 dB as a function of the distance, because the decay is inversely proportional to the square of the distance, with spherical wave emission.

On the contrary, the sound level emitted by the electrostatic loudspeaker decays less, thanks to plane and parallel wave radiation diagram (radiance phenomenon).

There is no sound level decay up to a distance equal to the panel width/π, beyond which the decay is of -3dB as a function of the square of the distance. Beyond a distance equal to the height of the panel/π, a decay of -6dB starts.

The use of an electrostatic loudspeaker optimizes the sound diffusion, because the emitted acoustic signal is clean, less noisy, and therefore the sound emitted is clearer than that of the cone loudspeakers, especially for medium-high frequencies, that are typical, for example of the voice signal.

Moreover, the depth of an electrostatic loudspeaker is largely lower that that of a cone loudspeaker, therefore it is not bulky and can be easily installed in places with little room available.

Even though its use in a vehicle seems to be appropriate, there are still a number of problems to be solved.

For example, it is necessary to respect the strict environmental specifications about the wide temperature and humidity range to be sustained.

It is also difficult to find the best installation position in the cabin of a commercial or industrial vehicle, because of a number of requirements to be obtained relating to:
- the emission of both voice and music signals;
- the need for directivity in order to direct some sounds only toward the driver and not toward other directions, for example for the integration with a Global Positioning System (GPS), or for other service communications;
- the realization of the best splitting of sound zones in the cabin, in order to direct sound of different types toward different listeners.

Therefore the aim of the present invention is to provide an electrostatic loudspeaker system for application in the cabin of an industrial or commercial vehicle suitable for solving all the problems set forth above.

The object of the present invention is a system of electrostatic loudspeakers for application in the cabin of an industrial or commercial vehicle, said electrostatic loudspeakers being integrated in possibly removable panels, with a shape as to follow the cabin body's shape, **characterized in that** said electrostatic loudspeakers are positioned inside the cabin so that there are at least:
- two electrostatic loudspeakers in lateral position over the doors,
- two electrostatic loudspeakers in front position over the windscreen, on the front roof panel, or on the sun visors; the positions and inclinations of the electrostatic loudspeakers are such that the sound can be directed toward the people in the cabin, in particular toward the driver.

The present invention refers in particular to an electrostatic loudspeaker system for application in the cabin of an industrial or commercial vehicle, as described more fully in the claims, which are an integral part of this description.

Further purposes and advantages of this invention will become clear from the following detailed description of a preferred embodiment that is merely illustrative and not limitative.

The electrostatic loudspeaker system that is object of this invention is made by a determined number of panels integrating electrostatic loudspeakers mounted in particular areas of the vehicle cabin.

Each panel is for example made of rigid plastic material, in which a compartment for integrating the loudspeaker is prepared, while over the loudspeaker can be placed a protection net made of porous fabric that is transparent to the sound, for example alcantara.

The panel shape has to be such that it perfectly integrates in the shape of the cabin's plate where it is mounted, and also it has to be such that it allows the integration in an frame that can be extracted for its maintenance or replacement.

The thickness of the panel is between 10 and 20 mm, therefore the loudspeaker can be easily inserted in it, as to allow also to easily insert sound absorbent material at the back toward the cabin's plate, since the loudspeaker emits sounds through both the lateral surface of its perforated plates.

The typical surface of the electrostatic loudspeaker is equal to an area of 200 mm by 200 mm, with a square or other rectangular shape.

It is possible to change the directivity of the emitted sound, in the sense of increasing it, by realizing for example slightly curve and not flat loudspeakers, up to a certain, not high, bending radius (for example 15 m) allowed by the embodiment.

It is possible to divide the loudspeaker into more parts, guaranteeing the appropriate overall area mentioned above, in order to increase the bending and the overall directivity of the emitted sound.

According to the invention, the panel such as those described above with appropriate shape, are placed in predeterminate positions and inclinations in the cabin, so that:
- two loudspeakers are in lateral position over the doors,
- two loudspeakers are in front position over the windscreen, on the front roof panel, or on the sun visors; The positions and inclinations are optimized with the aim to direct the sound toward the people in the cabin, in particular toward the driver.

Moreover the loudspeakers in the panels that are nearer to the driver are managed in a way that is independent from the others, as to direct sounds to the driver that may be different, for example travelling indications, or service communications.

It is also possible to insert other panels, if there is enough room in the cabin, in the rear area where there may be a bed or additional seats for other passengers.

It is also possible to insert a loudspeaker of the electromagnetic type for the reproduction of low frequencies (subwoofer), for example lower than 200 Hz, which generally are not reproduced by the electrostatic loudspeakers, preferably in the rear lower area, under the rear bed, if present. This loudspeaker is necessary if the reproduction of high-fidelity stereo music is wanted.

A sound amplification system is present, of the type per se known, appropriately controlled both manually and automatically by an electronic control unit, suitable for individually providing electric signals to each loudspeaker.

It is therefore possible to activate or deactivate the sound emission of each single loudspeaker, in particular of that or those directed toward the driver, even with different sound levels.

Moreover, thanks to the high directivity of the emitted sound, the sound directed to the driver and heard by the latter in a clear way, with a high sound level, is muffled toward the other directions, so that the other passengers are not disturbed, with reductions of even 24 dB.

The advantages in connection with the use of this invention are clear.

The system allows to improve the sound in the vehicle, thanks to the better sound clearness of the electrostatic loudspeakers with respect to the cone loudspeakers.

The lightness and the thinness of the panels allow to integrate this system in the cabin optimizing the use of the available space.

The directionality of the system allows to direct the voice messages for a safe driving directly toward the driver, without disturbing the other passengers.

Therefore the function of the electrostatic loudspeaker system is to replace the present systems allowing:
- a better clearness of the audio and voice signal in the industrial or commercial vehicles, for example for acoustic warnings and warning signals for a safe driving;
- a differentiated listening to sound and voice messages, thanks to the panel's directionality;
- the integration with GPS, telephone, and other systems (HMI, information and entertainment);
- a weight reduction with respect to the traditional audio system;
- the reduction of the number of system components, for example number of brackets or of speakers;
- the reduction of the complexity of the electrical system, with the reduction of the number of electrical wires;
- the best space exploitation in the vehicle, since it no longer uses the bulky traditional speakers.

From the description set forth above it will be possible for the person skilled in the art to embody the invention with no need of describing further construction details.

## Claims

1. System of electrostatic loudspeakers for application in the cabin of an industrial or commercial vehicle, said electrostatic loudspeakers being inserted in possibly removable panels, with a shape as to follow the cabin bodywork's shape, **characterized in that** said electrostatic loudspeakers are positioned inside the cabin so that there are at least:
- two electrostatic loudspeakers in lateral position over the doors,
- two electrostatic loudspeakers in front position over the windscreen, on the front roof panel, or on the sun visors; the positions and inclinations of the electrostatic loudspeakers are such that the sound can be directed toward the people in the cabin, in particular toward the driver.

2. System according to claim 1, comprising further electrostatic loudspeakers in the rear area of the cabin.

3. System according to claim 1 or 2, further comprising a loudspeaker of the electromagnetic type for the reproduction of low frequencies, preferably in the rear lower area or the cabin.

4. System according to any of the previous claims, further comprising a sound amplification system, which is controllable both manually and automatically by an electronic control unit, suitable for individually providing the electric signals to each single loudspeaker, in particular that or those directed toward the driver, even with different sound levels.
